# EUROPEAN PATENT SPECIFICATION

(11) **EP 1 032 116 B1**
(45) Date of publication and mention of the grant of the patent: **15.11.2006**
(21) Application number: 00301361.2
(22) Date of filing: 22.02.2000
(51) Int. Cl.: H02P 25/14

(54) **Vacuum cleaner**
Staubsauger
Aspirateur

(30) Priority: 22.02.1999 JP 4254899
(43) Date of publication of application: 30.08.2000
(73) Proprietor: MATSUSHITA ELECTRIC INDUSTRIAL CO., LTD., Kadoma-shi, Osaka 571-8501 (JP)
(72) Inventor: Fujiwara, Toshiaki, Youkaichi-shi, Shiga 527-0092 (JP); Fukushima, Masaichi, Omihachiman-shi, Shiga 523-0891 (JP)
(74) Representative: Crawford, Andrew Birkby

(56) References cited:
- WO-A-96/23349
- DE-A- 3 200 753
- DE-A- 3 728 609
- US-A- 5 455 886
- PATENT ABSTRACTS OF JAPAN vol. 1999, no. 06, 31 March 1999 (1999-03-31) & JP 01 141638 A (MATSUSHITA ELECTRIC IND CO LTD), 2 June 1989 (1989-06-02)
- PATENT ABSTRACTS OF JAPAN vol. 010, no. 150 (E-408), 31 May 1986 (1986-05-31) & JP 61 009195 A (MATSUSHITA DENKI SANGYO KK), 16 January 1986 (1986-01-16)
- PATENT ABSTRACTS OF JAPAN vol. 1995, no. 08, 29 September 1995 (1995-09-29) & JP 07 114422 A (YASHIMA DENKI CO LTD), 2 May 1995 (1995-05-02)

## Description

### BACKGROUND OF THE INVENTION

The present invention relates to a vacuum cleaner, and more particularly to a vacuum cleaner having a fan motor of high input.

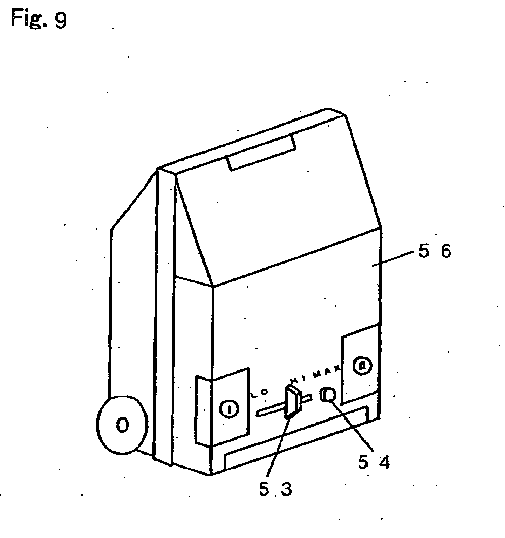

A conventional vacuum cleaner is described below while referring to Fig. 10 and Fig. 11.

In the drawings, a fan motor 50 has high input taps 50b, 50e, and medium input taps 50c, 50d, and generates a suction wind. A phase control circuit 51 controls the input of the fan motor 50. A variable resistor 52 is connected to the phase control circuit 51, and composes an input variable section. Inside a cleaner main body 56, the fan motor 50, phase control circuit 51, and variable resistor 52 are disposed.

An operation element 53 slidably disposed on the top of the cleaner main body 56 is coupled to the variable resistor 52, and by sliding operation of the operation element 53, the variable resistor 52 slides, so that input control can be set by the phase control circuit 51. A changeover switch 54 is also disposed on the top of the cleaner main body 56, and is designed to change over the incorporated contact points 54a to 54d.

The operation element 53 is designed to set from LO (low input setting) to HI (high input setting) steplessly, and when setting the input of the fan motor 50 by sliding the operation element 53, the changeover switch 54 is connected so as to connect the medium input taps 50c, 50d, phase control circuit 51 and power source 55, thereby changing over to turn on the contact points 54b and 54c and turn off the contact points 54a and 54d.

That is, when adjusting the input of the fan motor 50 by the phase control circuit 51, the changeover switch 54 is changed over as shown in Fig. 10 (a), and the resistance value of the variable resistor 52 is changed to control the input of the fan motor 50 by the phase control circuit 51.

On the other hand, when the changeover switch 54 is changed over to MAX (maximum input setting), the electric connection is changed over to the high input taps 50b, 50e side of the fan motor 50. That is, the contact points 54a and 54d are turned on, and the contact points 54b and 54c are turned off, and at the time of maximum input setting, the high input taps 50b, 50e and power source 55 are connected directly.

In other words, in the case of maximum input setting, the contact points of the changeover switch 54 are changed over as shown in Fig. 10 (b), and therefore the maximum input of the fan motor 50 can be obtained, and since they are connected to the power source 55 by skipping the phase control circuit 51, the phase is not controlled by the phase control circuit 51.

Herein, the reason of changing over the input taps is as explained below.

In the motor of higher input, the harmonic current is increased by phase control, and the alternating-current waveform(generally sinusoidal voltage waveform) supplied to the household is disturbed, and malfunction and other adverse effects are caused in other electric household appliances. Accordingly, in the case of phase control, the input tap is changed over to the medium input taps 50c, 50d side, and the phase is controlled as low input motor (Fig. 10 (a)), and where maximum input is required, the input tap is changed over to high input taps 50b, 50e side, thereby using as high input motor without phase control (Fig. 10 (b)).

In such conventional constitution, however, since the fan motor 50 is incorporated in the cleaner main body 56, the changeover switch 54 for connecting the fan motor 50 was also provided in the cleaner main body 56. That is, since the changeover switch 54 changes over the input taps 50b to 50e of the fan motor 50, it requires a switch of large current and high voltage specification capable of passing motor current directly and withstanding supply voltage directly, and the changeover switch 54 itself becomes large in size, and hence it must be disposed inside of the cleaner main body 56. Accordingly, in order to change over the input of the fan motor 50, the changeover switch 54 on the cleaner main body 56 must be manipulated, and in the case of floor-moving type cleaner shown in Fig. 11, for example, it is designed to clean by holding a hose (not shown) connected to the cleaner main body 56, but when changing over the input of the fan motor 50, it was forced to manipulate by stretching hand to the cleaner main body 56 side remote from the hose on every occasion.

The invention is designed to solve the above problems, and it is hence an object thereof to present a vacuum cleaner capable of setting the manipulating position for setting maximum input freely regardless of the cleaner main body, and suppressing the harmonic current.

Document WO 96/23349 discloses a device for control of the speed of a series motor powered from an AC source. The free end of the stator winding is connected to a first two-way silicon controlled rectifier. The stator winding is also provided with a tap which is connected to a second two-way silicon controlled rectifier. Means is provided to control the conduction state of the silicon controlled rectifiers.

### SUMMARY OF THE INVENTION

To achieve the object, the invention comprises
a fan motor (1) having a plurality of input taps (1bm, 1bh, 1ah, 1am) each having a first semiconductor element (6bm1, 6bh2, 6ah1, 6am1) connected in series therewith;
an input setting unit (2) for setting the input of said fan motor;
a tap judging unit (25) for selecting the input tap of said fan motor depending on the input of the fan motor being set by said input setting unit, and
a tap changeover unit (6) for changing over the input tap of said fan depending on the output from said tap judging unit and using said first semiconductor elements; **characterised in that** said vacuum cleaner further comprises:
   a fan motor controller (3) for controlling the phase of the fan motor using a second semiconductor element (7) connected serially with at least one of said first semiconductor elements and depending on the input of the fan motor being set by the input setting unit, and
   a timer unit (30) for operating for a specific time by receiving a tap changeover signal from the tap judging unit (25), and a tap selection prohibiting unit (32) for stopping the operation of the tap changeover unit (6) when a signal is issued from said timer unit, wherein neither input tap (1am,1bm,1ah,1bh) is selected for the specified time set by said timer unit at the time the input taps are changed over.
Thus, changeover of input taps and phase control depending on the input setting are enabled, restricting conditions about configuration of input setting unit and constituent parts are eliminated, and it is free to install also in other position than the cleaner main body.

### BRIEF DESCRIPTION OF THE DRAWINGS

Fig. 1 is a circuit block diagram of a vacuum cleaner.
Fig. 2 (a) is an appearance view of a semiconductor element used in a switching unit of the same circuit block.
Fig. 2 (b) is a circuit diagram of the semiconductor element.
Fig. 3 is a circuit block diagram of a vacuum cleaner.
Fig. 4 is a circuit block diagram of a vacuum cleaner showing an embodiment of the invention.
Fig. 5 is a circuit block diagram of a vacuum cleaner.
Fig. 6 is a circuit block diagram of a vacuum cleaner.
Fig. 7 is a circuit block diagram of a vacuum cleaner.

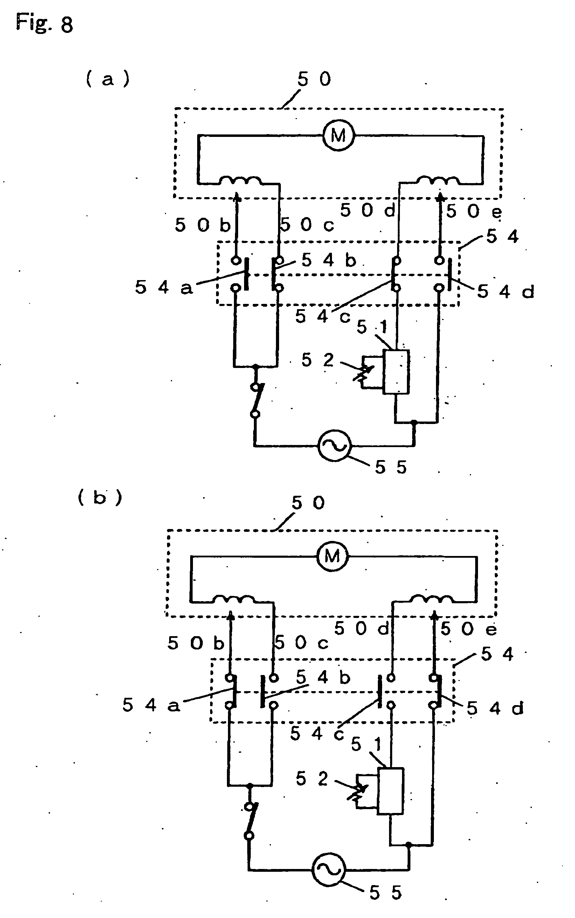

Fig. 8(a) circuit block diagram of a vacuum cleaner. showing a prior art (setting at smaller input than maximum input).
Fig. 8(b) is a circuit block diagram of the same vacuum cleaner (setting at maximum input).
Fig. 11 is a perspective appearance view of the same vacuum cleaner.

### DESCRIPTION OF THE PREFERRED EMBODIMENTS

A first aspect of the invention comprises a fan motor having a plurality of input taps, an input setting unit for setting the input of the fan motor, a fan motor controller for controlling the phase of the fan motor depending on the input of the fan motor being set by this input setting unit, a tap judging unit for selecting the input tap of the fan motor depending on the input of the fan motor being set by the input setting unit, and a tap changeover unit for changing over the input tap of the fan motor by this tap judging unit, and therefore changeover of input taps and phase control depending on the input setting are enabled, restricting conditions about configuration of input setting unit and constituent parts are eliminated, and it is free to install also in other position than the cleaner main body.

A second aspect of the invention comprises a fan motor having a plurality of input taps, an input setting unit for setting the input of the fan motor, a fan motor controller for controlling the phase of the fan motor depending on the input of the fan motor being set by this input setting unit, a tap judging unit for selecting the input tap of the fan motor depending on the input of the fan motor being set by the input setting unit, and a tap changeover unit for changing over the input tap of the fan motor by this tap judging unit, in which when a maximum fan motor input is set in the input setting unit, the tap changeover unit changes over to the high input tap side, and the phase control range in the motor controller is set so that the harmonic current may be lower than a specified value, and therefore changeover of input tap and phase control depending on input setting are enabled, and the harmonic current is controlled below the level of having adverse effects on other electric household appliances, so that malfunction of other electric household appliances can be prevented.

In a fifth aspect of the invention, the tap changeover unit is composed of a semiconductor element such as a bidirectional thyristor, and therefore the service life of the product is extended, the tap changeover time is shortened, and the product reliability is enhanced.

In a sixth aspect of the invention, the tap changeover unit is composed of a semiconductor element and a contact type element such as relay connected parallel thereto, and therefore decline of performance of product due to electric power loss in the semiconductor can be prevented.

In a seventh aspect of the invention, the semiconductor element at the same field system coil side is mounted on a same cooling fin, and therefore, by curtailment of the number of parts, the cost is lowered, the mounting area is decreased, and the product size is reduced.

An eighth aspect of the invention further comprises an initial tap setting unit for issuing a signal for setting a specified tap when turning on the power to the tap judging unit, and therefore since a specified tap is set when turning on the power, unstable action in tap changeover unit in transient state can be eliminated.

In a ninth aspect of the invention, the tap judging unit does not select any input tap of the fan motor when stopping is set in the input setting unit, and therefore, in stopped state, no current flows in the circuit of the switching unit, and the waiting electric power is decreased as much as possible.

A tenth aspect of the invention further comprises a timer unit for operating for a specific time by receiving a tap changeover signal from the tap judging unit, and a tap selection prohibiting unit for stopping the operation of the tap changeover unit when a signal is issued from the timer unit, and therefore short-circuit at input tap can be prevented, and abnormal current does not flow, and the motor life can be extended.

In an eleventh aspect of the invention, the tap selection prohibiting unit receives a signal of ZVP detector for detecting 0 V of supply voltage, and sends a drive signal to the tap changeover unit in synchronism with next 0 V after output of the timer unit, and therefore the input tap is closed in synchronism with AC 0 V, and the rush current can be suppressed, and in particular the reliability of the tap changeover unit and switching unit can be enhanced.

A twelfth aspect of the invention further comprises a current detector for detecting the current flowing in the input tap, a maximum current setting unit for setting its maximum current, and an abnormal signal generator for receiving outputs of the current detector and maximum current setting unit, and issuing an operation stop signal to the fan motor controller or tap changeover unit when a current larger than the maximum current flows, and therefore if short-circuit occurs between input taps due to failure of parts or the like, abnormal current is detected by the current detector, and the fan motor is stopped by the abnormal signal generator, so that seizure of fan motor or the like can be avoided.

A thirteenth aspect of the invention further comprises a dust detector for detecting a dust level, in which the input tap is changed over to other than high input tap when controlling the phase of the input of the fan motor depending on the output of the dust detector, and therefore tap changeover does not occur when detecting dust, and there is not extreme change in input sound, so that the user does not feel any strangeness.

In a fourteenth aspect of the invention, the field system coil of the fan motor is a single field system composition, and therefore, as compared with the double field system composition, the tap changeover unit and current detector are composed in a half number of parts, so that the cost is reduced.

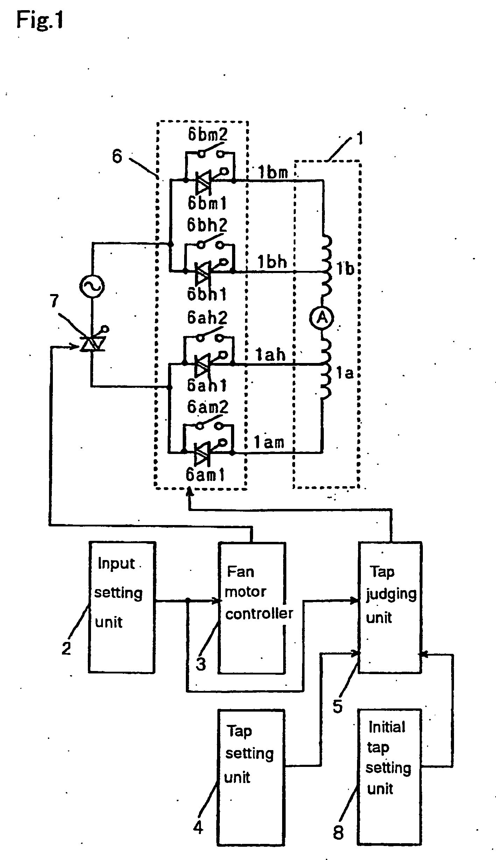

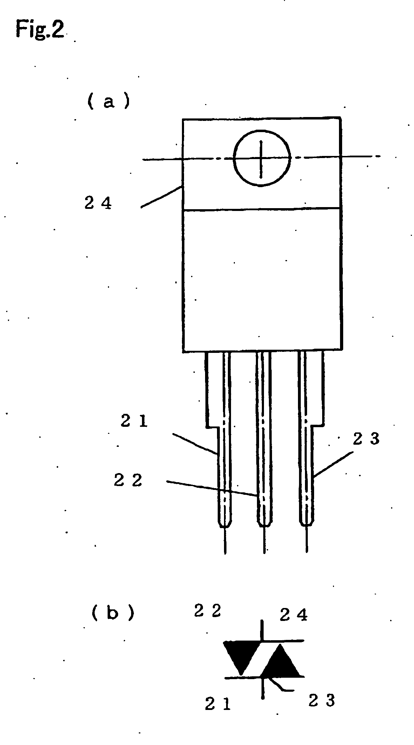

Referring now to Fig. 1 and Fig. 2, a block diagram of a vacuum cleaner is described below.

In Fig. 1, a fan motor 1 has high input taps 1ah, 1bh and medium input taps 1am, 1bm provided in field system coils 1a, 1b, and is designed to generate a suction force for sucking dust into the cleaner main body. An input setting unit 2 sets input of the fan motor 1 by using a variable resistor. A fan motor controller 3 detects the set input of the fan motor 1 from the output of the input setting unit 2, and controls the phase of the fan motor 1 according to the set input.

A tap setting unit 4 sets the tap changeover level of the fan motor 1. In this embodiment, the maximum input set value corresponding to the signal of the maximum input by the input setting unit 2 is set. A tap judging unit 5 judges the tap of the fan motor 1 to be selected by the outputs of the input setting unit 2 and tap setting unit 4, and in this embodiment if the signal from the input setting unit 2 is more than the maximum input set value of the tap setting unit 4, it is judged to select the high input taps 1ah, 1bh, and if the signal from the input setting unit 2 smaller than the maximum input set value of the tap setting unit 4, medium input taps 1am, 1bm are selected.

A tap changeover unit 6 selects and conducts the input taps 1ah, 1bh, 1am, 1bm of the fan motor 1 depending on the output from the tap judging unit 5. In this embodiment, it is composed of a plurality of bidirectional thyristors 6ah1, 6bh1, 6am1 and 6bm1, and relays 6ah2, 6bh2, 6am2, 6bm2 connected parallel thereto. A switching unit 7 controls the conduction fed to the fan motor 1 from total conduction to the phase controlled conduction by the output of the fan motor controller 3. Using bidirectional thyristors same as in the tap changeover unit 6, when the maximum input is set in the input setting unit 2, the fan motor controller 3 sends a signal for total conduction to the switching unit 7, and when an input smaller than the maximum input is set, the fan motor controller 3 sends a phase control signal corresponding to this input setting to the switching unit 7.

An initial tap setting unit 8 sends a signal for setting a specified input tap when turning on the power source to the tap judging unit 5. In this embodiment, it is set so as to select the medium taps 1am and 1bm at the time of turning on the power source.

The operation of this constitution is as follows.

When turning on the power source, the initial tap setting unit 8 sends a signal for selecting medium input taps 1am, 1bm to the tap judging unit 5, and the tap changeover unit 6 conducts the bidirectional thyristors 6aml, 6bml and relays 6am2, 6bm2 for feeding power to the medium input taps 1am, 1bm.

When the setting level of the input setting unit 2 is other than the maximum input, the signal from the input setting unit 2 is smaller than the maximum input set value of the tap setting unit 4, and therefore the tap judging unit 5 sends a signal for selecting medium input taps 1am, 1bm. As a result, the tap changeover unit 6 conducts the bidirectional thyristors 6am1, 6bm1 and relays 6am2, 6bm2 for feeding power to the medium input taps 1am, 1bm. This signal of the input setting unit 2 is also issued to the fan motor controller 3, and the switching unit 7 controls the phase of the fan motor 1 at the phase corresponding to this input set value.

On the other hand, when the setting level of the input setting unit 2 is the maximum input, the signal from the input setting unit 2 is more than the maximum input set value of the tap setting unit 4, and therefore the tap judging unit 5 sends a signal for selecting the high input taps 1ah, 1bh. As a result, the tap changeover unit 6 conducts the bidirectional thyristors 6ah1, 6bh1 and relays 6ah2, 6bh2 for feeding power to the high input taps 1ah, 1bh. This signal of the input setting unit 2 is also issued to the fan motor controller 3, the switching unit 7 comes into total conduction state, and the fan motor 1 reaches the maximum input.

Thus, comprising the tap judging unit 5 for selecting the input taps 1ah, 1am, 1bh, and 1bm of the field system coils 1a, 1b depending on the signal set in the input setting unit 2, and the tap changeover unit 6 for changing over the input taps by this tap judging unit 5, the input setting unit 2 can be installed freely anywhere including outside of the cleaner main body.

Herein, the tap changeover unit 6 is composed of both bidirectional thyristors which can operate at high speed and are large in the ON resistance when conducting, and relays which are small in ON resistance when conducting but cannot operate at high speed, and therefore the tap changeover unit of high speed and small ON resistance is realized. In particular, the relays can reduce the ON resistance of two bidirectional thyristors almost to zero ohm, and a larger suction force (suction work rate) is assured.

The bidirectional thyristors used in the vacuum cleaner are mostly shaped as shown in Fig. 2, and it is a general method to mount a cooling fin on a T2 terminal 24, and cool the bidirectional thyristor by blowing wind (fan motor intake) to the cooling fin. As shown in Fig. 1, in this embodiment, a set of bidirectional thyristors 6ah1 and 6am1 (1a side) and a set of bidirectional thyristors 6bh1 and 6bm1 (1b side) provided at the same field system coil side are connected so that the T2 terminals may be both in the same polarity, and therefore it requires no insulating part for mounting each set, that is, both bidirectional thyristors at the same field system coil side on the same cooling fin.

In the case of maximum input, the fan motor controller 3 sets the switching unit 7 in total conduction state, but so far as the harmonic current may not have adverse effects on other devices, the phase may be controlled by the switching unit 7 within such range.

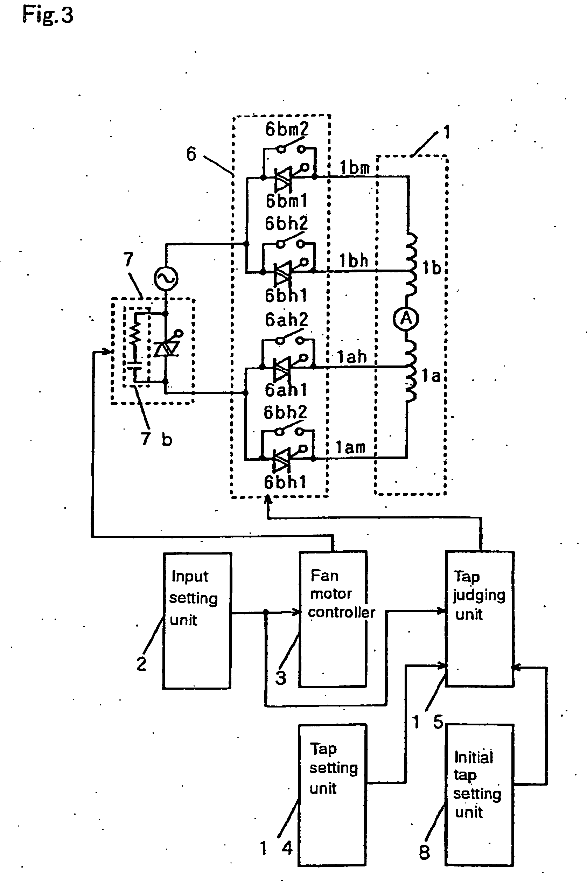

An other block-diagram is described below by reference to Fig. 3.

The same parts as in the preceding block-diagram are identified with same reference numerals and duplicate description is omitted.

In Fig. 3 a tap setting unit 14 is for setting the tap changeover level of a fan motor 1, and in this embodiment it preliminarily sets a value corresponding to the maximum input and a value corresponding to a stop input. A tap judging unit 15 judges the input tap of the fan motor 1 to be selected by the outputs from the input setting unit 2 and tap setting unit 14. In this embodiment, when the signal from the input setting unit 2 is larger than the value corresponding to the maximum input in the tap setting unit 14, high input taps 1ah, 1bh are selected, when smaller than the maximum input corresponding value and larger than the stop input corresponding value, medium input taps 1am, 1bm are selected, and when smaller than the stop input corresponding value, no input tap is selected.

The operation of this constitution is as follows.

When the setting level of the input setting unit 2 is maximum input, the signal from the input setting unit 2 is larger than the maximum input corresponding value of the tap setting unit 14, and therefore the tap judging unit 15 issues a signal for selecting high input taps 1ah, 1bh. As a result, the tap changeover unit 6 conducts bidirectional thyristors 6ah1, 6bh1 and relays 6ah2, 6bh2 for feeding power to the high input taps 1ah, 1bh. Since the signal of this input setting unit 2 is also issued to the fan motor controller 3, the switching unit 7 is set in total conduction state, and the fan motor 1 reaches the maximum input.

When the setting level of the input setting unit 2 is smaller than the maximum input (but not stop input), the signal from the input setting unit 2 is somewhere between the maximum input corresponding value of the tap setting unit 14 and the stop input corresponding value, and therefore the tap judging unit 15 issues a signal for selecting medium input taps 1am, 1bm. This signal from the input setting unit 2 is also issued to the fan motor controller 3, and the switching unit 7 controls the phase of the fan motor 1 at the input corresponding to the set value.

When the setting level of the input setting unit 2 is stop input, the signal from the input setting unit 2 is smaller than the stop input corresponding value of the tap setting unit 14, the tap judging unit 15 issues no selection signal, so that none of the high input taps 1ah, 1bh and medium input taps 1am, 1bm is selected. Therefore, the fan motor 1 does not operate. In this state, the route to a snubber circuit 7b composed of resistance and capacitor connected parallel to the bidirectional thyristor as the switching unit is cut off, so that current in stopped state can be decreased more or less.

Incidentally, if the input taps are changed over very quickly, it is known that a counter electromotive force is generated in field system coils 1a, 1b. By this counter electromotive force, the current flowing when selecting the high input taps 1ah, 1bh increases several times. It leads to an abnormal high temperature state, and further insulation breakdown between coil layers of the field system coils 1a, 1b, or abnormal spark between commutator and brush, thereby shortening the life of the fan motor 1 extremely.

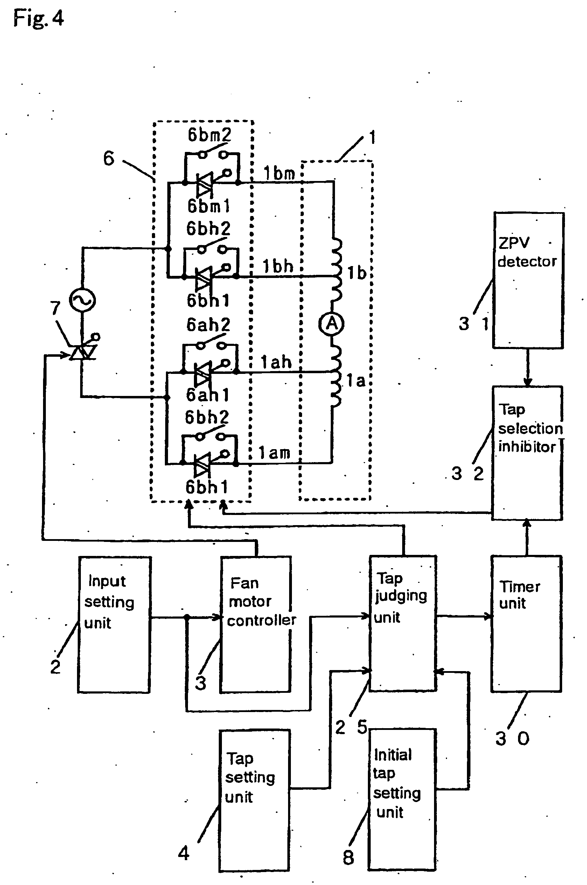

An embodiment of the invention is described below by reference to Fig. 4.

The same parts as in the preceding block diagrams are identified with same reference numerals and duplicate description is omitted.

In Fig. 4, a tap judging unit 25 issues an input tap changeover signal when it is judged necessary to change over the input tap of a fan motor 1. A timer unit 30, receiving this input tap changeover signal, operates to a preset specified time. In this embodiment, the time is set at 30 milliseconds. A ZVP detector 31 detects 0 V of supply voltage. A tap selection inhibitor 32 continues to issue a signal for stopping the operation to the tap changeover unit 6 while the signal is issued from the timer unit 30, and receives a signal from the ZVP detector 31, and issues a drive signal to the tap controller in synchronism with next 0 V after termination of output of the timer unit 30.

The operation of this constitution is as follows.

When the setting level of the input setting unit 2 is smaller than the maximum input, the tap judging unit 25 issues a signal for selecting medium input taps 1am, 1bm, and the tap changeover unit 6 and fan motor controller 3 operate same as in embodiment 1, and the fan motor 1 is controlled in phase at the input corresponding to the set value of the input setting unit 2.

Herein, when the setting level of the input setting unit 2 is set at the maximum input, the tap judging unit 25 issues a signal for selecting high input taps 1ah, 1bh and an input tap changeover signal. By this input tap changeover signal, the timer unit 30 starts to operate and stop its operation in a specified time (30 milliseconds). In the tap changeover unit 6, a signal for feeding power to the high input taps 1ah, 1bh is supplied from the tap judging unit 25, and at the same time a stop signal is issued from the tap selection inhibitor 32, and therefore neither input tap is selected. Only when synchronizing with next 0 V after termination of operation of the timer unit 30, the stop signal from the tap selection inhibitor 32 is canceled, and the tap changeover unit 6 changes over the input taps.

Incidentally, if the input taps are changed over very quickly, it is known that a counter electromotive force is generated in field system coils 1a, 1b. By this counter electromotive force, the current flowing when selecting the high input taps 1ah, 1bh increases several times. It leads to an abnormal high temperature state, and further insulation breakdown between coil layers of the field system coils 1a, 1b, or abnormal spark between commutator and brush, thereby shortening the life of the fan motor 1 extremely.

However, by thus constituting, since neither input tap is selected for the specified time (30 milliseconds) of the timer unit 30, input tap simultaneous short-circuit does not occur, and the input tap changeover is done in synchronism with AC 0 V, so that rush current can be suppressed.

In the embodiment, the preset time of the timer unit 30 is 30 milliseconds, but it depends on the winding ratio of the high input tap and medium input tap of the fan motor 1 to be used, and in short it may be within a certain time not inducing tap simultaneous short-circuiting.

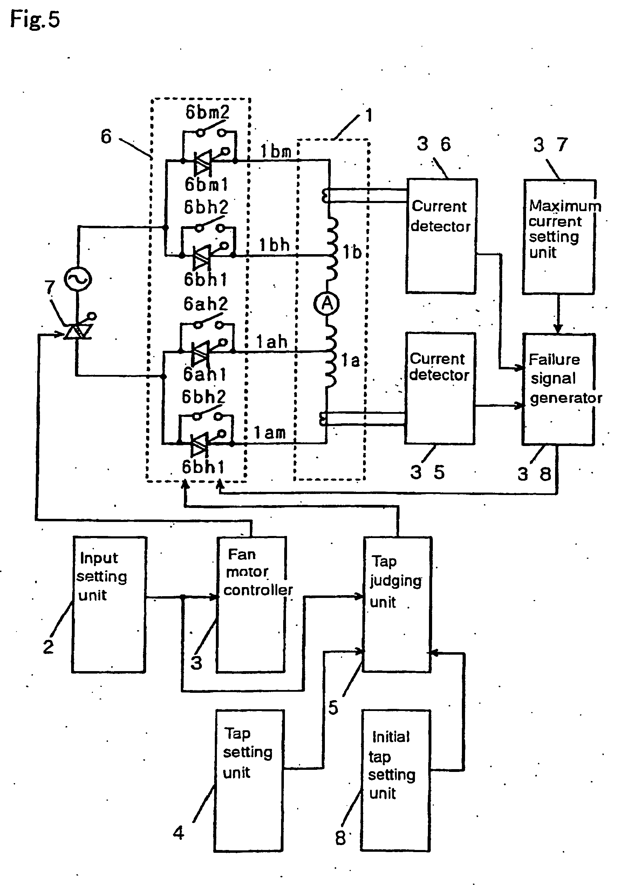

A further block diagram is described below by reference to Fig. 5.

The same parts as in the preceding embodiments are identified with same reference numerals and duplicate description is omitted.

In Fig. 5, current detectors 35 and 36 detect the current flowing in field system coils 1a, 1b between high input taps and medium input taps, that is, 1ah to 1am and 1bh to 1bm. A maximum current setting unit 37 sets its maximum current value. A failure signal generator 38 receives outputs from the current detectors 35 and 36 and maximum current setting unit 37, and issues an operation stop signal to the tap changeover unit 6 when a current larger than the maximum current value flows.

The operation of this constitution is as follows.

Usually, the tap changeover unit 6 is selecting either high input tap or medium input tap, and the current flowing in the current detectors 36 and 37 is same as the current flowing in the switching unit 7.

If, however, the high input taps 1ah, 1bh and medium input taps 1am, 1bm are short-circuited due to trouble of parts or other cause, an abnormal high current flows in the field system coils 1a, 1b, and the current detected by the current detector 36 and/or 37 is larger than the set value in the maximum current setting unit 37, and the failure signal generator 38 issues a stop signal to the tap changeover unit 6, and the fan motor 1 stops, and hence abnormal current does not flow.

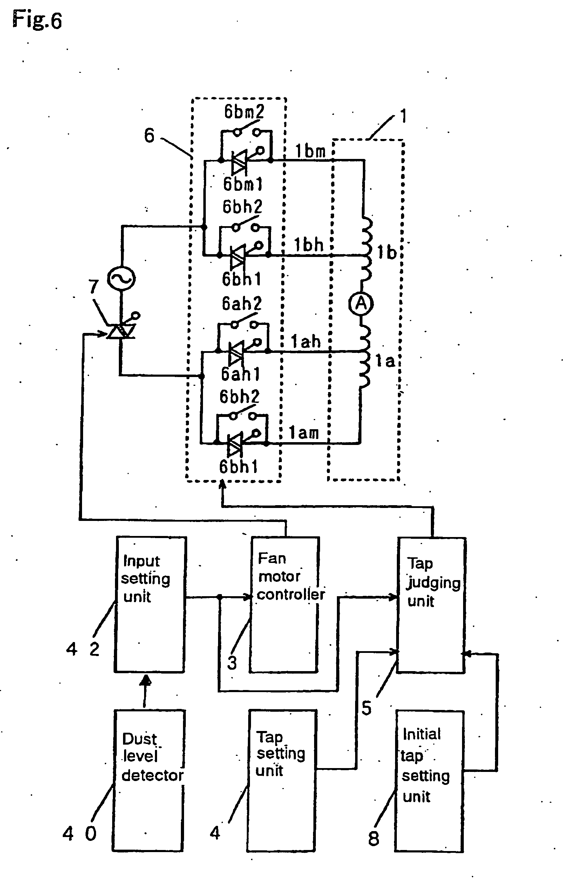

A further block-diagram is described below by reference to Fig. 6. The same parts as in the preceding block-diagrams are identified with same reference numerals and duplicate description is omitted.

In Fig. 6, a dust level detector 40 detects the dust level sucked by a fan motor 1, and feeds into an input setting unit 42. The input setting unit 42 sets the input of the fan motor 1 depending on the output of the dust level detector 40, but it is designed to set so as to remain at the maximum input of the medium input when the medium input tap of the field system coil is selected even when detecting the upper limit of the dust level.

The operation of this constitution is as follows.

When detecting the dust level, the input setting unit 42 is issues a signal for selecting medium input taps 1am, 1bm by the tap judging unit 5. Unless dust is detected by the dust level detector 40, the input setting unit 42 issues the set input corresponding to the minimum input to the fan motor controller 3, and the fan motor controller 3 controls the fan motor 1 at the minimum input.

When detecting the dust, the tap judging unit 5 continues to issue a signal for selecting medium input taps 1am, 1bm, and therefore the operation of the tap changeover unit 6 is not changed. However, the input setting unit 42 issues a set input corresponding to the dust level to the fan motor controller 3, and therefore the input of the fan motor 1 elevates in a range of the maximum input of medium input taps 1am, 1bm.

That is, when detecting the dust level, changeover of input taps does not occur, and the delay action as in embodiment 5 for suppressing the rush current occurring when changing over the input taps is not required. That is, to control the fan motor 1 by detecting the dust level, the input tap is not changed over, and the design being restricted by the set time of the timer unit is not needed, and the designing time can be shortened, and at the same time since the input changeover sound is not changed extremely due to input tap changeover of the fan motor 1, the user feels nothing strange.

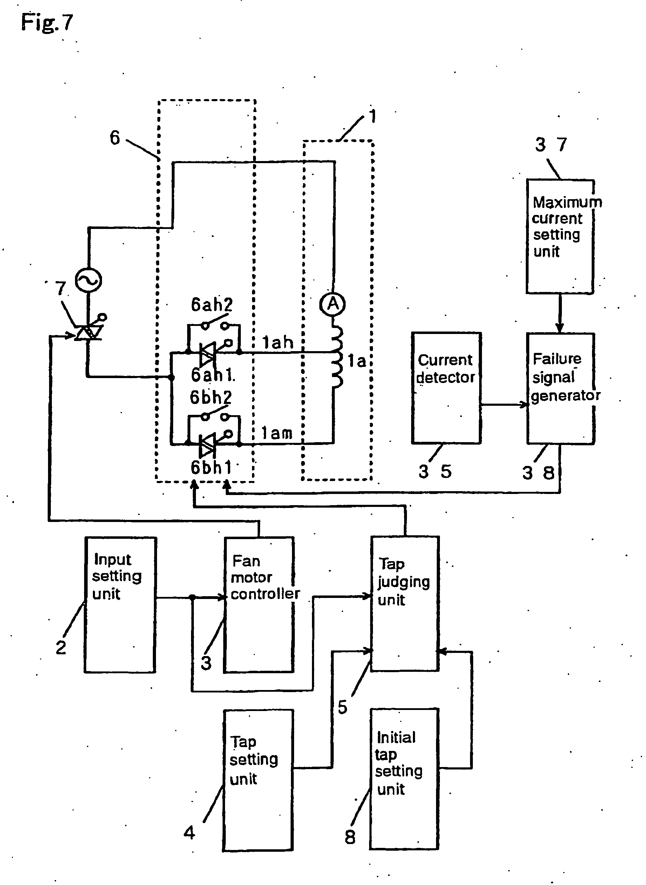

A further block-diagram is described below by reference to Fig. 7.

The same parts as in the preceding block-diagrams are identified with same reference numerals and duplicate description is omitted.

In the foregoing embodiments, the fan motor 1 is of double field system type, but in this embodiment, as shown in Fig. 7, the field system coil of the fan motor 1 is composed of one field system (1a only), and the tap changeover unit 6 and current detectors 35, 36 are composed of a half number of elements, so that the cost is reduced to half.

Thus, in the embodiments of the invention, there is no restriction about configuration of the input setting unit 2, and hence it can be applied not only in the floor moving type vacuum cleaner of conventional type having input setting in the main body, but also in the floor moving type vacuum cleaner having an operation unit at the handling area of the hose, upright type cleaner, handy cleaner, and other forms of cleaners.

Moreover, by using a microcomputer in the fan motor controller 3, it is easy to use a tactile switch in the input setting unit 2, so that the input setting unit 2 is free from restricting conditions of the parts and configuration.

## Claims

1. A vacuum cleaner comprising:
a fan motor (1) having a plurality of input taps (1bm, 1bh, 1ah, 1am) each having a first semiconductor element (6bm1, 6bh2, 6ah1, 6am1) connected in series therewith;
an input setting unit (2) for setting the input of said fan motor;
a tap judging unit (25) for selecting the input tap of said fan motor depending on the input of the fan motor being set by said input setting unit, and
a tap changeover unit (6) for changing over the input tap of said fan depending on the output from said tap judging unit and using said first semiconductor elements; **characterised in that** said vacuum cleaner further comprises:
a fan motor controller (3) for controlling the phase of the fan motor using a second semiconductor element (7) connected serially with at least one of said first semiconductor elements and depending on the input of the fan motor being set by the input setting unit, and
a timer unit (30) for operating for a specific time by receiving a tap changeover signal from the tap judging unit (25), and a tap selection prohibiting unit (32) for stopping the operation of the tap changeover unit (6) when a signal is issued from said timer unit, wherein neither input tap (1am,1bm,1ah,1bh) is selected for the specified time set by said timer unit at the time the input taps are changed over.

2. The vacuum cleaner of claim 1, wherein when a maximum fan motor input is set in said input setting unit, the tap changeover unit changes over to the high input tap side (1bh, 1ah), and the phase control range in said motor controller is set so that the harmonic current may be lower than a specified value.

3. The vacuum cleaner of any preceding claim, wherein the tap changeover unit is composed of a semiconductor element such as a bidirectional thyristor.

4. The vacuum cleaner of any of claims 1 to 2, wherein the tap changeover unit is composed of a semiconductor element and a contact type element (6bm2, 6bh2, 6ah2, 6am2) such as relay connected parallel thereto.

5. The vacuum cleaner of claim 3 or 4, wherein the semiconductor element at the same field system coil side is mounted on a same cooling fin.

6. The vacuum cleaner of any one of claims 1 to 5, further comprising an initial tap setting unit (8) for issuing a signal for setting a specified tap when turning on the power to the tap judging unit.

7. The vacuum cleaner of any one of claims 1 to 6, wherein the tap judging unit does not select any input tap of the fan motor when stopping is set in the input setting unit.

8. The vacuum cleaner of any one of claims 1 to 7, wherein the tap selection prohibiting unit receives a signal of ZVP detector (31) for detecting 0 V of supply voltage, and sends a drive signal to the tap changeover unit in synchronism with next 0 V after output of the timer unit.

9. The vacuum cleaner of any one of claims 1 to 8, further comprising a current detector (35, 36) for detecting the current flowing in the input tap, a maximum current setting unit (37) for setting its maximum current, and an failure signal generator (38) for receiving outputs of said current detector and maximum current setting unit, and issuing an operation stop signal to the fan motor controller or tap changeover unit when a current larger than the maximum current flows.

10. The vacuum cleaner of any one of claims 1 to 9, further comprising a dust detector (40) for detecting a dust level, wherein the input tap is changed over to other than high input tap when controlling the phase of the input of the fan motor depending on the output of said dust detector.

11. The vacuum cleaner of any one of claims 1 to 10, wherein the field system coil of the fan motor is a signal field system composition.

## Patentansprüche

1. Staubsauger, der umfasst:
einen Gebläsemotor (1), der eine Vielzahl von Eingangsleistungs-Anzapfungen (1 bm, 1 bh, 1 ah, 1 am) aufweist, von denen jede über ein erstes, mit ihr in Reihe geschaltetes Halbleiterelement (6bm1, 6bh1, 6ah1, 6am1) verfügt;
eine Eingangsleistungs-Einstelleinheit (2) zum Einstellen der Eingangsleistung des Gebläsemotors;
eine Anzapfungs-Entscheidungseinheit (25) zum Auswählen der Eingangsleistungs-Anzapfung des Gebläsemotors abhängig von der Eingangsleistung des Gebläsemotors, die durch die Eingangsleistungs-Einstelleinheit eingestellt wird; und
eine Anzapfungs-Umschalteinheit (6) zum Umschalten der Eingangsleistungs-Anzapfung des Gebläses, die von der Ausgabe der Anzapfungs-Entscheidungseinheit abhängt und die die ersten Halbleiterelemente verwendet;
**dadurch gekennzeichnet, dass** der Staubsauger ferner umfasst:
einen Gebläsemotor-Regler (3) zum Regeln der Phase des Gebläsemotors unter Verwendung eines zweiten Halbleiterelements (7), das mit wenigstens einem der ersten Halbleiterelemente in Reihe geschaltet ist und von der durch die Eingangsleistungs-Einstelleinheit eingestellten Eingangsleistung des Gebläsemotors abhängt; und
einen Zeitschalter (30), der durch Empfang eines Anzapfungs-Umschaltsignals von der Anzapfungs-Entscheidungseinheit (25) für eine bestimmte Zeit in Betrieb ist; und
eine Anzapfungsauswahl-Verhinderungseinheit (32) zum Beenden der Funktion der Anzapfungs-Umschalteinheit (6), wenn ein Signal vom Zeitschalter ausgegeben wird, in welchem keine Eingangsleistungs-Anzapfung (1 am, 1 bm, 1ah, 1 bh) für die durch den Zeitschalter eingestellte festgelegte Zeit in der Zeit ausgewählt ist, in der die Eingangsleistungs-Anzapfungen umgeschaltet werden.

2. Staubsauger nach Anspruch 1, in welchem, wenn durch die Eingangsleistungs-Einstelleinheit eine maximale Gebläsemotor-Eingangsleistung eingestellt ist, die Anzapfungs-Umschalteinheit zur Seite der Anzapfungen mit hoher Eingangsleistung (1 bh, 1 ah) umschaltet, und der Phasen-Regelbereich im Motorregler so eingestellt ist, dass der Oberwellenstrom geringer als ein festgelegter Wert sein kann.

3. Staubsauger nach einem vorhergehenden Anspruch, in welchem die Anzapfungs-Umschalteinheit aus einem Halbleiterelement, wie zum Beispiel einem Doppelwegthyristor gebildet ist.

4. Staubsauger nach einem der Ansprüche 1 bis 2, in welchem die Anzapfungs-Umschalteinheit aus einem Halbleiterelement und einem Schaltglied (6bm2, 6bh2, 6ah2, 6am2), wie zum Beispiel einem dazu parallel geschalteten Relais, gebildet ist.

5. Staubsauger nach Anspruch 3 oder 4, in welchem das Halbleiterelement an der gleichen Spulenseite des Feldsystems auf einer gleichen Kühlrippe montiert ist.

6. Staubsauger nach einem der Ansprüche 1 bis 5, der ferner eine Anfangsanzapfungs-Einstelleinheit (8) zum Ausgeben eines Signals umfasst, damit eine festgelegte Anzapfung eingestellt wird, wenn der Strom für die Anzapfungs-Entscheidungseinheit eingeschaltet wird.

7. Staubsauger nach einem der Ansprüche 1 bis 6, in welchem die Anzapfungs-Entscheidungseinheit keine Eingangsleistungs-Anzapfung des Gebläsemotors auswählt, wenn die Eingangsleistungs-Einstelleinheit auf Beenden eingestellt ist.

8. Staubsauger nach einem der Ansprüche 1 bis 7, in welchem die Anzapfungsauswahl-Verhinderungseinheit ein Signal des ZVP Detektors (31) zum Erkennen von Überspannung der Netzspannung empfängt, und nach Ausgabe des Zeitschalters ein Treibersignal an die Eingangsleistungs-Umschalteinheit in Synchronität mit der nächsten Überspannung sendet.

9. Staubsauger nach einem der Ansprüche 1 bis 8, der ferner umfasst:
einen Stromprüfer (35, 36) zum Erkennen des in der Eingangsleistungs-Anzapfung fließenden Stroms;
eine Höchststrom-Einstelleinheit (37) zum Einstellen ihres Höchststroms; und
einen Störsignalgenerator (38) zum Empfangen der Ausgaben des Stromprüfers und der Höchststrom-Einstelleinheit und der ein Betriebsstopp-Signal an den Gebläsemotor-Regler oder die Eingangsleistungs-Umschalteinheit ausgibt, wenn ein Strom fließt, der stärker als der Höchststrom ist.

10. Staubsauger nach einem der Ansprüche 1 bis 9, der ferner einen Staubdetektor (40) zum Erkennen eines Staub-Füllstandes umfasst, in welchem bei Regelung der Phase der Eingangsleistung des Gebläsemotors, abhängig von der Ausgabe des Staubdetektors, die Eingangsleistungs-Anzapfung zu einer anderen als einer Anzapfung für hohe Eingangsleistung umgeschaltet wird.

11. Staubsauger nach einem der Ansprüche 1 bis 10, in welchem die Feldsystem-Spule des Gebläsemotors die Struktur eines Einzelfeldsystems zeigt.

## Revendications

1. Aspirateur comprenant :
un moteur de ventilateur (1) ayant une pluralité de prises d'entrée (1bm, 1bh, 1ah, 1am) ayant chacune un premier élément semi-conducteur (6bm1, 6bh2, 6ah1, 6am1) connecté en série avec celles-ci ;
une unité de réglage d'entrée (2) pour régler l'entrée dudit moteur de ventilateur ;
une unité de jugement de prise (25) pour sélectionner la prise d'entrée dudit moteur de ventilateur en fonction de l'entrée du moteur de ventilateur qui est réglée par ladite unité de réglage d'entrée, et
une unité de changement de prise (6) pour changer la prise d'entrée dudit ventilateur en fonction de la sortie de ladite unité de jugement de prise et en utilisant lesdits premiers éléments semi-conducteurs ;
**caractérisé en ce que** ledit aspirateur comprend en outre ;
un dispositif de commande de moteur de ventilateur (3) pour commander la phase du moteur de ventilateur en utilisant un deuxième élément semi-conducteur (7) connecté en série avec au moins un desdits premiers éléments semi-conducteurs et en fonction de l'entrée du moteur de ventilateur qui est réglée par l'unité de réglage d'entrée, et
une unité de temporisation (30) pour opérer pendant un temps spécifique en recevant un signal de changement de prise de l'unité de jugement de prise (25), et une unité d'empêchement de sélection de prise (32) pour arrêter le fonctionnement de l'unité de changement de prise (6) lorsqu'un signal est émis depuis ladite unité de temporisation, dans lequel aucune prise d'entrée (1am, 1bm, 1ah, 1bh) n'est sélectionnée pendant le temps spécifié défini par ladite unité de temporisation au moment où les prises d'entrée sont changées.

2. Aspirateur selon la revendication 1, dans lequel lorsqu'une entrée de moteur de ventilateur maximum est réglée dans ladite unité de réglage d'entrée, l'unité de changement de prise bascule du côté des prises d'entrée hautes (1bh, 1ah), et la plage de commande de phase dans ledit dispositif de commande de moteur est réglée de façon à ce que le courant harmonique puisse être inférieur à une valeur spécifiée.

3. Aspirateur selon l'une quelconque des revendications précédentes, dans lequel l'unité de changement de prise est composée d'un élément semi-conducteur tel qu'un thyristor bidirectionnel.

4. Aspirateur selon l'une quelconque des revendications 1 ou 2, dans lequel l'unité de changement de prise est composée d'un élément semi-conducteur et d'un élément de type à contact (6bm2, 6bh2, 6ah2, 6am2) tel qu'un relais connecté en parallèle ce celui-ci.

5. Aspirateur selon la revendication 3 ou 4, dans lequel l'élément semi-conducteur sur le même côté de bobine d'inducteur est monté sur une même ailette de refroidissement.

6. Aspirateur selon l'une quelconque des revendications 1 à 5, comprenant en outre une unité de réglage de prise initial (8) pour émettre un signal afin de régler une prise spécifiée lors de la mise sous tension de l'unité de jugement de prise.

7. Aspirateur selon l'une quelconque des revendications 1 à 6, dans lequel l'unité de jugement de prise ne sélectionne aucune prise d'entrée du moteur de ventilateur lorsque l'arrêt est réglé dans l'unité de réglage d'entrée.

8. Aspirateur selon l'une quelconque des revendications 1 à 7, dans lequel l'unité d'empêchement de sélection de prise reçoit un signal d'un détecteur ZVP (31) pour détecter 0 V de tension d'alimentation, et envoie un signal d'attaque à l'unité de changement de prise en synchronisme avec le 0 V suivant après la sortie de l'unité de temporisation.

9. Aspirateur selon l'une quelconque des revendications 1 à 8, comprenant en outre un détecteur de courant (35, 36) pour détecter le courant circulant dans la prise d'entrée, une unité de réglage de courant maximum (37) pour régler son courant maximum, et un générateur de signal d'échec (38) pour recevoir des sorties desdits détecteur de courant et unité de réglage de courant maximum, et fournir un signal d'arrêt de fonctionnement au dispositif de commande de moteur de ventilateur ou à l'unité de changement de prise lorsqu'un courant supérieur au courant maximum circule.

10. Aspirateur selon l'une quelconque des revendications 1 à 9, comprenant en outre un détecteur de poussière (40) pour détecter un niveau de poussière, dans lequel la prise d'entrée bascule sur une prise d'entrée autre qu'une prise d'entrée haute lors du contrôle de la phase de l'entrée du moteur de ventilateur en fonction de la sortie dudit détecteur de poussière.

11. Aspirateur selon l'une quelconque des revendications 1 à 10, dans lequel la bobine d'inducteur du moteur de ventilateur est une composition de signal à inducteur.
